Europäisches Patentamt

European Patent Office

Office européen des brevets

(11) Veröffentlichungsnummer : **0 137 160 B1**

## (12) EUROPÄISCHE PATENTSCHRIFT

(45) Veröffentlichungstag der Patentschrift :
09.09.87

(51) Int. Cl.⁴ : **C 01 B 7/01, C 07 C 17/15**

(21) Anmeldenummer : 84108798.4

(22) Anmeldetag : 25.07.84

(54) Verfahren und Anlage zur Rückgewinnung von Chlorwasserstoff aus chlorierten Kohlenwasserstoffrückständen.

(30) Priorität : 24.09.83 DE 3334677

(43) Veröffentlichungstag der Anmeldung :
17.04.85 Patentblatt 85/16

(45) Bekanntmachung des Hinweises auf die Patenterteilung : 09.09.87 Patentblatt 87/37

(84) Benannte Vertragsstaaten :
AT BE CH DE FR GB IT LI LU NL SE

(56) Entgegenhaltungen :
FR-A- 1 580 937
FR-A- 1 595 619
FR-A- 2 498 583
FR-A- 2 498 584
US-A- 3 816 599
US-A- 3 950 443
US-A- 3 968 200
US-A- 3 980 758
US-A- 4 157 380

(73) Patentinhaber : Uhde GmbH
Friedrich-Uhde-Strasse 15 Postfach 262
D-4600 Dortmund 1 (DE)

(72) Erfinder : Rieker, Ulrich
Hasselstrasse 49
D-6232 Bad Soden (DE)
Erfinder : Link, Gerhard, Dipl.-Ing.
Aubachstrasse 55
D-6500 Mainz (DE)

(74) Vertreter : Patentanwälte Meinke und Dabringhaus
Dipl.-Ing. J. Meinke Dipl.-Ing. W. Dabringhaus
Westenhellweg 67
D-4600 Dortmund 1 (DE)

**Beschreibung**

Die Erfindung richtet sich auf ein Verfahren zur Rückgewinnung von Chlorwasserstoff aus chlorierten Kohlenwasserstoffrückständen aus einer Vinyl-Chlorid-Herstellung.

Aus der DE-A 23 14 786 ist es bekannt, Abgase einer VC-Anlage zu verbrennen, wobei das bei der Verbrennung entstehende HCl in einer Quenche abgekühlt und zur Salzsäure absorbiert wird.

Nachteilig an der bekannten Verfahrensweise ist insbesondere, daß die Salzsäure auch nach Aufkonzentration auf ca. 30 % ein relativ wertloses Produkt darstellt, weil, wie der Stand der Technik zeigt, der in der Säure gebundene Chlorwasserstoff nur durch eine apparativ sehr aufwendige Desorption wieder in den VC-Herstellungsprozeß zurückgeführt werden kann.

Ein weiterer wesentlicher Nachteil bei der bekannten Verfahrensweise besteht darin, daß bei der dort beschriebenen Desorption im Sumpf eine azeotrope Säure abgezogen werden muß, so daß etwa ein Drittel des in die Desorption eingesetzten HCl verloren geht. Hinzu kommt, daß bei einer dünnen Säure, d. h. unterhalb des Azeotrops, mehr Wasser in der dem Oxy-Reaktor nachgeschalteten Wäsche oder Destillation abgetrennt werden muß. Zusätzlich erhöht sich die Korrosionsgefahr.

Aufgabe der Erfindung ist die Schaffung einer Lösung, mit der zum einen die beschriebenen aufwendigen Verfahren vermieden werden und mit der erreicht wird, daß aus der Salzsäure der Chlorwasserstoff einfach zurückgewonnen werden kann.

Mit einem gattungsgemäßen Verfahren wird diese Aufgabe gemäß der Erfindung dadurch gelöst, daß die aus der Rückstandsverbrennung und nachgeschaltetem Quenche-Kreislauf entstammende Salzsäure zunächst verdampft, anschließend überhitzt und dann dem Oxychlorierungs-Reaktor direkt zugeführt wird.

Mit der erfindungsgemäßen Verfahrensweise ergibt sich eine Reihe von Vorteilen :

Die Rückstandsverbrennung kann unabhängig von der Oxy-Chlorierung von 0-100 % Last betrieben werden. Bei dem bekannten Verfahren als Catoxydprozeß muß eine Anlage abgestellt werden, wenn die Oxy-Chlorierung ausfällt bzw. der Durchsatz unter 50 % des Normalwertes sinkt. Ein weiterer Vorteil der erfindungsgemäßen Verfahrensweise besteht darin, daß jederzeit auf Salzsäureproduktion umgestellt werden kann, wenn dies gewünscht wird. Auch die in der Fachwelt vertretenen Bedenken direkter Salzsäurezufuhr, die sich dadurch ergeben, daß Salzsäure ein sehr korrosives Medium darstellt, können mit der Erfindung ausgeräumt werden.

In Ausgestaltung sieht die Erfindung vor, daß zur Verdampfung und Überhitzung eine hochkonzentrierte Salzsäure eingesetzt wird, womit sich der Wirkungsgrad des Verfahrens steigern läßt.

Die Erfindung sieht auch vor, daß der überhitzten Salzsäure rückgeführtes HCl aus einer Vinyl-Chlorid-Destillation beigemischt wird, wobei in weiterer Ausgestaltung vorgesehen sein kann, daß die überhitzte Salzsäure in einer gemeinsamen Leitung mit dem aus der VC-Destillation kommenden Rück-HCl und mit Äthylen dem Oxy-Reaktor zugeführt wird.

Insbesondere die letzte Verfahrensweise bedingt, daß das Verfahren auch mit einem nichtsäurefest ausgelegten Reaktor durchführbar ist, da die erfindungsgemäße Mischung Korrosion vermindert bzw. ganz ausschließt.

Grundsätzlich gibt es eine Reihe von Möglichkeiten, Anlagen zu erstellen, mit denen die Erfindung durchführbar ist. Zum bekannten Stand der Technik sei hier lediglich als Beispiel auf die FR-A- 2 498 584 verwiesen. Anhand der nachfolgenden Zeichnung, die ein vereinfacht wiedergegebenes Anlageschaltbild zeigt, soll die Erfindung hier näher beschrieben werden :

Über eine Leitung 1 werden flüssige Rückstände und über eine Leitung 2 Abgase sowie zusätzlich Luft und Wasser einer Brennkammer 3 zugeführt und dort verbrannt.

Die entstehenden Rauchgase werden über eine Leitung 4 einer Quenche 5 zugeführt. Gleichzeitig wird der Quenche 5 über eine Leitung 6 Salzsäure zugeführt zum Abkühlen der Rauchgase. Das enthaltene HCl wird über eine Leitung 8 einem Absorber 9 zugeführt und im Absorber 9 zu konzentrierter Salzsäure absorbiert, die in einem Säurebehälter 10 o. dgl. gesammelt wird.

Die Säure geht von dort über eine Leitung 6, wie beschrieben, zur Quenche 5 zurück. Über die Leitung 11 wird der andere Teil der Salzsäure im dargestellten Beispiel zunächst in einem Wärmetauscher 12 verdampft und in einem weiteren Wärmedampfer 13 überhitzt.

Es versteht sich von selbst, daß die Verdampfung und Überhitzung auch in einem einzigen Wärmetauscher vorgenommen werden kann. Dies ist durch eine strichpunktierte Linie symbolisiert und mit dem Bezugzeichen 14 versehen.

Der überhitzte Säuredampf wird über eine Leitung 15 einer Leitung 16 zugeführt, die einen Oxy-Reaktor 17 beaufschlagt. Geichzeitig wird der Leitung 16 über eine Leitung 18 Rück-HCl von der VC-Destillation zugeführt, ebenso wie über eine Leitung 19 Äthylen.

In dem Oxy-Reaktor 17 reagiert das HCl zusammen mit dem $O_2$ und $C_2H_4$ in Gegenwart eines Katalysators zu Dichloräthan und wird dort über die Leitung 20 abgenommen und dem weiteren Prozeß zugeführt.

Je nach Bauart können statt der dargestellten « Tandemwärmetauscher » Wärmetauscherkolonnen vorgesehen sein, parallel und hintereinander geschaltete Wärmetauscher u. dgl. mehr. Wie weiter unten beschrieben, können die einzusetzenden Gebläse und Pumpen vergleichsweise klein ausgeführt sein. Aus Übersichtsgründen sind diese Aggregate in der Prinzipskizze nicht gesondert dargestellt.

Mit dieser Anlage wird eine Vielzahl von bisher notwendigen aufwendigen Anlageteilen vermieden. Gleichzeitig kann konzentrierte Säure eingesetzt werden, so daß in einer nachfolgenden Reinigung weniger Wasser abgetrennt werden muß. Auch entfällt, wie beim Stand der Technik, eine direkte Gasleitung zwischen dem Oxy-Reaktor und der Brennkammer, womit ein sicherer Betrieb gewährleistet ist.

In Verbindung mit den anderen Anlageteilen wird erreicht, daß die Anlage mit einfachen Gebläsen zu betreiben ist, während bei der Catoxyd- oder Druckverbrennung Kompressoren notwendig sind. Auch lassen sich kleinere Verbrennungsluftgebläse einsetzen, so daß sich insgesamt ein viel wirtschaftlicherer Betrieb durchführen läßt, womit es besonders wirtschaftlich wird, das HCl im Kreislauf zu führen.

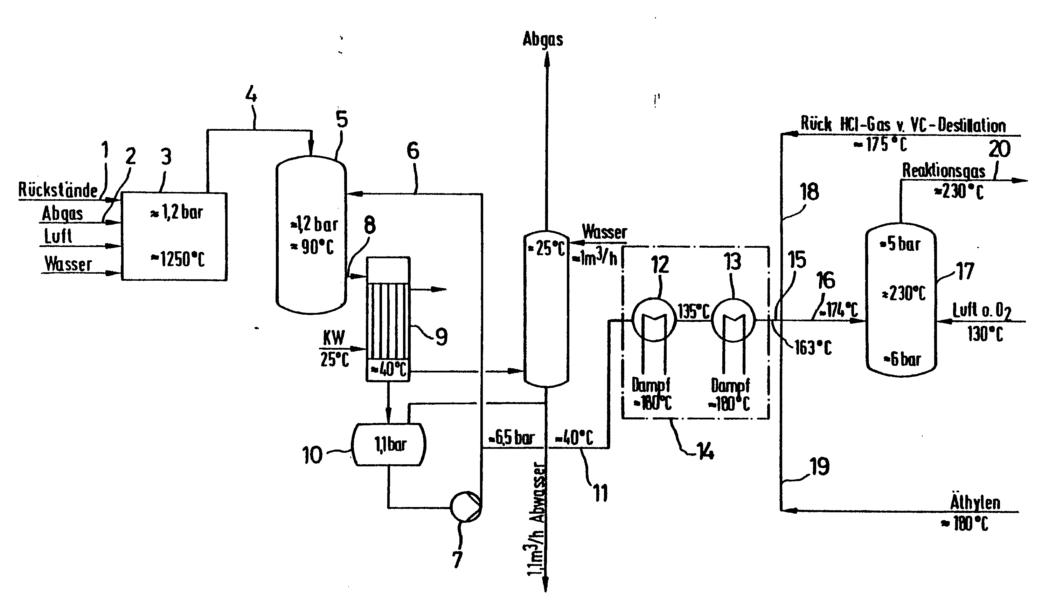

**Patentansprüche**

1. Verfahren zur Rückgewinnung von Chlorwasserstoff aus chlorierten Kohlenwasserstoffrückständen aus der Vinyl-Chlorid-Herstellung, dadurch gekennzeichnet, daß die aus der Rückstandsverbrennung und einem nachgeschalteten Quenche-Kreislauf entstammende Salzsäure zunächst verdampft, anschließend überhitzt und dann dem Oxy-Chlorierungs-Reaktor direkt zugeführt wird.

2. Verfahren nach Anspruch 1, dadurch gekennzeichnet, daß zur Verdampfung und Überhitzung eine hochkonzentrierte Salzsäure eingesetzt wird.

3. Verfahren nach Anspruch 1 oder 2, dadurch gekennzeichnet, daß der überhitzten Salzsäure rückgeführtes HCl aus einer Vinyl-Chlorid-Destillation beigemischt wird.

4. Verfahren nach Anspruch 1 oder 2, dadurch gekennzeichnet, daß die überhitzte Salzsäure in einer gemeinsamen Leitung mit dem aus der VC-Destillation kommenden Rück-HCl und mit Äthylen dem Oxy-Reaktor zugeführt wird.

**Claims**

1. A process for the recovery of hydrogen chloride from chlorinated hydrocarbon residues from the production of vinyl chloride characterised in that the hydrochloric acid which originates from residue combustion and a subsequent quench circuit is firstly vaporised, then superheated and then passed directly to the oxychlorination reactor.

2. A process according to claim 1 characterised in that a highly concentrated hydrochloric acid is used for the vaporisation and superheating operations.

3. A process according to claim 1 or claim 2 characterised in that recycled HCl from a vinyl chloride distillation operation is mixed with the superheated hydrochloric acid.

4. A process according to claim 1 or claim 2 characterised in that the superheated hydrochloric acid is passed to the oxy reactor in a common conduit with the recycled HCl from the VC-distillation operation and with ethylene.

**Revendications**

1. Procédé pour la récupération de chlorure d'hydrogène à partir de résidus d'hydrocarbures chlorés issus de la fabrication de chlorure de vinyle, caractérisé en ce que l'acide chlorhydrique, issu de la combustion du résidus et d'un circuit de réfrigérant monté en aval de cette dernière, est d'abord vaporisé, puis surchauffé et ensuite amené directement au réacteur d'oxychloruration.

2. Procédé selon la revendication 1, caractérisé en ce que pour la vaporisation et le surchauffage est utilisé un acide chlorhydrique hautement concentré.

3. Procédé selon la revendication 1 ou 2, caractérisé en ce qu'à l'acide chlorhydrique surchauffé est mélangé du HCl recyclé issu d'une distillation de chlorure de vinyle.

4. Procédé selon la revendication 1 ou 2, caractérisé en ce que l'acide chlorhydrique surchauffé est amené, dans un conduit commun, avec le HCl recyclé issu de la distillation de chlorure de vinyle et avec de l'éthylène au réacteur d'oxydation.

Rück. HCl-Gas v. VC-Destillation ≈175°C — Reaktionsgas ≈230°C — 20

17 — Luft o. O₂ 130°C

≈5 bar  ≈230°C  ≈6 bar

Äthylen ≈180°C

18  15  16  ≈174°C  163°C  19

13 — Dampf ≈180°C

135°C

12 — Dampf ≈180°C  14

Wasser ≈1m³/h

Abgas

≈25°C

≈40°C  11

≈6,5 bar  1,1m³/h Abwasser

6

9

≈40°C

7

KW 25°C

1,1 bar  10

5  8  ≈12 bar  ≈90°C

4

3  ≈1,2 bar  ≈1250°C

1  2

Rückstände
Abgas
Luft
Wasser